## Europäisches Patentamt
## European Patent Office
## Office européen des brevets

(11) Veröffentlichungsnummer: **0 350 867 B1**

# EUROPÄISCHE PATENTSCHRIFT

(45) Veröffentlichungstag der Patentschrift:
18.09.91 Patentblatt 91/38

(51) Int. Cl.⁵: **F16D 55/224**

(21) Anmeldenummer: 89112667.4

(22) Anmeldetag: 11.07.89

(54) **Teilbelag-Scheibenbremse.**

(30) Priorität: 15.07.88 DE 8809123 U

(43) Veröffentlichungstag der Anmeldung:
17.01.90 Patentblatt 90/03

(45) Bekanntmachung des Hinweises auf die
Patenterteilung:
18.09.91 Patentblatt 91/38

(84) Benannte Vertragsstaaten:
DE ES FR GB IT

(56) Entgegenhaltungen:
DE-A- 2 905 833

(73) Patentinhaber: LUCAS INDUSTRIES public
limited company
Great King Street
Birmingham, B19 2XF West Midlands (GB)

(72) Erfinder: Op den Camp, Eckard
Kemperhofweg 17
W-5400 Koblenz (DE)

(74) Vertreter: Goetz, Rupert, Dipl.-Ing. et al
Wuesthoff & Wuesthoff Patent- und
Rechtsanwälte Schweigerstrasse 2
W-8000 München 90 (DE)

## Beschreibung

Die Erfindung betrifft eine Teilbelag-Scheibenbremse mit
— einem Bremsträger, der an einer ersten Seite einer Bremsscheibe zu befestigten ist und ein auf die andere Seite übergreifendes Brückenteil aufweist,
— zwei Bremsbacken, die auf je einer Seite der Bremsscheibe angeordnet und gegen die Bremskräfte am Bremsträger abgestützt sind,
— einer Betätigungsvorrichtung, die zur direkten Betätigung einer Bremsbacke an der ersten Seite der Bremsscheibe angeordnet ist, und
— einem Schwimmsattel, der zur Übertragung von Betätigungskräften auf die andere, indirekt betätigte Bremsbacke über die Bremsscheibe hinweggreift.

Bei einer bekannten Teilbelag-Scheibenbremse dieser Gattung (DE 2905833 A1) besteht der Brückenteil des Bremsträgers aus zwei Brückenschenkeln, die sich im rechten Winkel zur Bremsscheibe über deren äußeren Rand hinweg erstrecken und an ihren einander zugewandten Seiten Führungsflächen für die beiden Bremsbacken aufweisen. Beim Betätigen der Bremsen werden die auf die Bremsbacken einwirkenden Bremskräfte auf die Führungsfläche des auslaufseitigen Brückenschenkels übertragen, das ist derjenige Brückenschenkel, an dem sich jeder einzelne Punkt des Bremsscheibenrandes vorbeibewegt, ehe er den Bereich der Bremse verläßt. Damit der auslaufseitige Brückenschenkel von den Bremskräften nicht übermäßig stark belastet wird, sind die freien Enden beider Brückenschenkel durch einen Querbügel miteinander verbunden. Auf diese Weise wird die elastische Verbiegung der beiden Brückenschenkel begrenzt, jedoch nicht ganz verhindert. Jeder der beiden Brückenschenkel weist eine zur Bremsscheibe normale Bohrung auf, in der ein am Schwimmsattel befestigter Führungsstift verschiebbar geführt ist. Wenn die beiden Brückenschenkel beim Bremsen verformt werden, erstrecken sich die beiden Bohrungen nicht mehr normal zur Bremsscheibe, und dementsprechend stellt sich auch der Schwimmsattel schräg. Dadurch wird eine in tangentialer Richtung der Bremsscheibe schräge Abnutzung der Bremsbacken begünstigt. Diese Schrägabnutzung läßt sich bei der bekannten Bremse nur dadurch in Grenzen halten, daß die beiden Brückenschenkel so große Querschnitte haben, daß ihre elastische Verbiegung gering gehalten wird. Zur Unterbringung dieser großen Querschnitte innerhalb einer Radschüssel eines Fahrzeugrades gegebenen Durchmessers ist es erforderlich, eine verhältnismäßig kleine Bremsscheibe zu verwenden, wodurch die Leistungsfähigkeit der Bremse begrenzt wird.

Der Erfindung liegt die Aufgabe zugrunde, die in tangentialer Richtung der Bremsscheibe schräge Abnutzung der Bremsbacken mit einfachen und platzsparenden Mitteln in engen Grenzen zu halten.

Die Aufgabe ist erfindungsgemäß bei einer Teilbelag-Scheibenbremse der eingangs beschriebenen Gattung dadurch gelöst, daß der Bremsträger an der ersten Seite der Bremsscheibe zwei Arme aufweist, von denen
— ein erster Arm geringerer Steifigkeit mit den Bremskräften der direkt betätigten Bremsbacke belastet ist,
— ein zweiter Arm größerer Steifigkeit den Brückenteil trägt und mit den von diesem aufgenommenen Bremskräften der indirekt betätigten Bremsbacke belastet ist und
— diese beiden Arme in ihrer Steifigkeit so aufeinander abgestimmt sind, daß die beiden Bremsbacken beim Bremsen wenigstens annähernd gleich große, durch elastische Verformungen der Bremse bedingte Bewegungen in Richtung der Bremskräfte ausführen.

Nach der Erfindung wird der zweite Arm so torsionssteif und der Brückenteil so biegesteif gestaltet, wie die räumlichen Verhältnisse es zulassen. Der erste Arm wird bewußt schwächer gestaltet, als die räumlichen Verhältnisse es zulassen würden, und er wird vom zweiten Arm derart getrennt, daß seine beim Bremsen verhältnismäßig große elastische Verformung durch die enger begrenzte elastische Verformung des zweiten Arms nicht behindert wird. Infolge dieser elastischen Verformungen bewegen sich die beiden Bremsbacken um gleiche oder wenigstens annähernd gleiche Strecken in Richtung einer Tangente oder Sekante der Bremsscheibe. Der Schwimmsattel bildet zusammen mit der Betätigungsvorrichtung eine zangenartige Einheit, die beim Bremsen stets bestrebt ist, ihre ursprüngliche Lage in bezug auf beide Bremsbacken aufrechtzuerhalten. Da nun beide Bremsbacken sich um gleiche Beträge in Richtung der Bremskräfte bewegen, kann die vom Schwimmsattel und der Betätigungsvorrichtung gebildete Zange dieser Bewegung folgen, ohne sich zu verkanten. Die Tendenz einer Schrägabnutzung der Bremsbacken tritt deshalb nicht auf oder wird jedenfalls in engen Grenzen gehalten.

Es ist grundsätzlich möglich, von den beiden genannten Armen einen auf der Einlaufseite und den anderen auf der Auslaufseite der Bremse anzuordnen. Vorzugsweise sind jedoch beide Arme, bezogen auf die Betriebsdrehrichtung der Bremsscheibe, auf der Einlaufseite der Bremse angeordnet.

Weitere vorteilhafte Ausgestaltungen der Erfindung ergeben sich aus den Ansprüchen 3 bis 7.

Ein Ausführungsbeispiel mit weiteren vorteilhaften Einzelheiten der Erfindung wird im folgenden anhand einer schematischen Zeichnung näher erläutert. In der Zeichnung zeigen :

Fig. 1   eine Teilbelag-Scheibenbremse für ein Kraftfahrzeugrad, in Richtung der Radachse von innen nach außen gesehen, und teilweise im Schnitt I-I in Fig. 2, und

Fig. 2   den Schnitt in der achsparallelen Ebene II-II in Fig. 1.

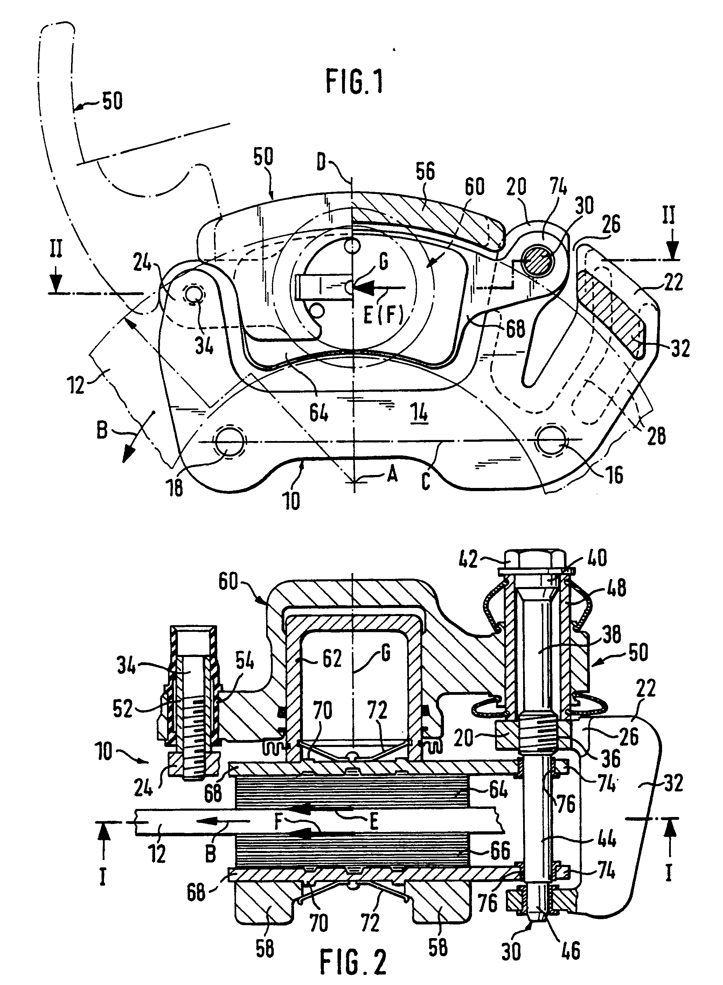

Die dargestellte Bremse hat einen Bremsträger 10, der dazu bestimmt ist, bezogen auf das zugehörige Fahrzeug axial innerhalb einer Bremsscheibe 12 an einem Achsgehäuse oder Achsschenkel befestigt zu werden. Zu diesem Zweck hat der Bremsträger 10 ein Basisteil 14, das sich hauptsächlich in Richtung einer Sekante der Bremsscheibe 12 erstreckt und auf der Einlaufseite sowie auf der Auslaufseite der Bremse je ein Loch 16 bzw. 18 für eine Befestigungsschraube aufweist. Unter Einlaufseite wird, wie oben, diejenige Seite der Bremse verstanden, die von jedem Punkt der sich um die Achse A in Richtung des Pfeils B drehenden Bremsscheibe 12 zuerst erreicht wird. Die Achsen der Löcher 16 und 18 liegen gemäß Fig. 1 in einer gemeinsamen Sekantenebene C ; dabei ist das einlaufseitige Loch 16 von der die Achse A enthaltenden Mittelebene D der Bremse weiter entfernt als das auslaufseitige Loch 18.

Vom Basisteil 14 erstrecken sich drei Arme 20, 22 und 24 annähernd radial, bezogen auf die Achse A, nach außen. Die Arme 20 und 22 liegen beide auf der Einlaufseite der Bremse und sind durch einen radialen Spalt 26 voneinander getrennt. Die Arme 20 und 24 sind annähernd symmetrisch in bezug auf die Mittelebene D angeordnet ; der Arm 20 ist jedoch etwas weniger kräftig als der Arm 24 gestaltet. Der zweite Arm 22 ist von der Mittelebene D weiter entfernt als der erste Arm 20 und ist erheblich kräftiger bemessen als jeder der Arme 22 und 24. Eine Gemeinsamkeit zwischen den Armen 22 und 24 besteht darin, daß jeder dieser Arme ungefähr von einem der Löcher 16 bzw. 18 ausgeht, seine Wurzel also in einem Bereich hat, in dem das Basisteil 14 an einem verhältnismäßig starren Fahrzeugteil befestigt ist.

Der Spalt 26 ist an seiner engsten Stelle gerade so breit, daß die beiden Arme 20 und 22 sich bei allen im Betrieb vorkommenden elastischen Verformungen nicht gegenseitig berühren können. Der erste Arm 20 ist in Umfangsrichtung der Bremsscheibe 12 verhältnismäßig biegeweich. Der zweite Arm 22 ist durch Rippen 28 versteift, die seine Verformbarkeit so eng wie möglich begrenzen.

Am radial äußeren Ende des ersten Arms 20 ist ein achsparalleler Bolzen 30 befestigt. Vom radial äußeren Ende des zweiten Arms 22 geht ein Brückenteil 32 des Bremsträgers aus, das sich parallel zur Achse A über die Bremsscheibe 12 hinweg erstreckt und jenseits der Bremsscheibe ungefähr radial nach innen abgewinkelt ist. Am radial äußeren Ende des dritten Arms 24 ist ein zweiter achsparalleler Bolzen 34 befestigt.

Der erste achsparallele Bolzen 30 hat ungefähr in der Mitte seiner Gesamtlänge ein Gewindeteil 36, das in den ersten Arm 20 eingeschraubt ist. Daran schließt sich in Richtung axial nach innen ein zylindrischer Schaft 38 an, der in einem verdickten Zentrierabschnitt 40 endet. In diesen ist eine Schraube 42 mit Sechskantkopf eingeschraubt. Axial nach außen schließt sich an das Gewindeteil 36 ein zylindrischer äußerer Schaft 44 an, der in einem Zapfen 46 verminderten Durchmessers endet.

Rings um den Schaft 38 ist eine Führung 48 in Form einer zylindrischen Büchse angeordnet, die am Zentrierabschnitt 40 zentriert und mit der Schraube 42 am ersten Arm 20 lösbar festgespannt ist. Auf der Führung 48 ist ein Schwimmsattel 50 parallel zur Achse A verschiebbar geführt. Eine zweite Führung für den Schwimmsattel 50 wird von einer Büchse 52 und einer sie mit radialem Abstand umgebenden elastischen Hülse 54 gebildet, die mit dem Bolzen 34 am dritten Arm 24 befestigt sind.

Der Schwimmsattel 50 hat einen Brückenteil 56, der über den radial äußeren Rand der Bremsscheibe 12 hinweggreift und auf deren fahrzeugäußerer Seite in einem Paar Stützfinger 58 endet, die ungefähr radial nach innen gerichtet sind. Auf der fahrzeuginneren Seite des Schwimmsattels 50 ist eine hydraulische Betätigungsvorrichung 60 mit einem Kolben 62 angeordnet.

Weitere Hauptbestandteile der Bremse sind eine direkt betätigbare Bremsbacke 64 auf der fahrzeuginneren Seite sowie eine indirekt betätigbare Bremsbacke 66 auf der fahrzeugäußeren Seite der Bremsscheibe 12. Die beiden Bremsbacken 64 und 66 haben je eine Rückenplatte 68 mit einem Zentrieransatz 70, der bei der direkt betätigten Bremsbacke 64 am Kolben 62 zentriert ist, während der Zentrieransatz 70 der indirekt betätigten Bremsbacke 66 zwischen den Stützfingern 58 zentriert gehalten ist. An der Rückenplatte 68 jeder der beiden Bremsbacken 64 und 66 ist außerdem eine mehrarmige Haltefeder 72 festgenietet, die im Kolben 62 bzw. an den Stützfingern 58 eingerastet ist.

Schließlich hat jede der Rückenplatten 68 einen Führungsansatz 74, durch den sich eine achsparallele Gleitbüchse 76 hindurcherstreckt. Durch diese beiden Gleitbüchsen 76 erstreckt sich der axial äußere Schaft 44 des Bolzens 30 nahezu spielfrei hindurch, so daß beide Bremsbacken 64 und 66 axial verschiebbar sind und alle beim Bremsen auftretenden Bremskräfte auf den Schaft 44 übertragen.

Die Bremskräfte, die von der sich in Betriebsdrehrichtung B drehenden Bremsscheibe 12 beim Bremsen auf die Bremsbacken 64 und 66 ausgeübt werden, sind mit E bzw. F bezeichnet. Die Bremskraft E wird über die Rückenplatte 68 der direkt betätigten Bremsbacke 64 wegen deren verhältnismäßig geringem Abstand vom ersten Arm 20 praktisch ausschließlich auf diesen Arm übertragen. Die Bremskraft F hingegen wird über die Rückenplatte 68 der indirekt betätigten Bremsbacke 66 wegen deren verhältnismäßig geringem Abstand von dem Zapfen 46 praktisch ausschließlich über diesen Zapfen auf den Brückenteil 32 und von diesem auf den zweiten Arm 22 übertragen.

Der Hebelarm der Kraft F in bezug auf den zweiten Arm 22 ist zwar erheblich größer als der Hebelarm der Kraft E in bezug auf den ersten Arm 20. Da aber der zweite Arm 22 erheblich kräftiger bemessen ist als der erste Arm 20, verbiegen sich beide Arme 20 und 22 gleichstark in Richtung der Bremskräfte E und F. Infolgedessen bewegen sich die beiden Bremsbacken 64 und 66 um gleiche Strecken in dieser Richtung. Die Achse G der Betätigungsvorrichtung 60, die bei unbetätigter Bremse parallel zur Achse A durch die Mittelpunkte der beiden Bremsbacken 64 und 66 verläuft, verschiebt sich mit den Bremsbacken beim Bremsen parallel zu sich selbst und bleibt somit parallel zur Achse A. Ein in Richtung der Bremskräfte E und F schräger Verschleiß der Bremsbacken 64 und 66 kann deshalb nicht in nennenswertem Maß auftreten.

## Patentansprüche

1. Teilbelag-Scheibenbremse mit
— einem Bremsträger (10), der an einer ersten Seite einer Bremsscheibe (12) zu befestigen ist und ein auf die andere Seite übergreifendes Brückenteil (32) aufweist,
— zwei Bremsbacken (64, 66), die auf je einer Seite der Bremsscheibe (12) angeordnet und gegen Bremskräfte am Bremsträger (10) abgestützt sind,
— einer Betätigungsvorrichtung (60), die zur direkten Betätigung einer Bremsbacke (64) an der ersten Seite der Bremsscheibe (12) angeordnet ist, und
— einem Schwimmsattel (50), der zur Übertragung von Betätigungskräften auf die andere, indirekt betätigte Bremsbacke (66) über die Bremsscheibe (12) hinweggreift, dadurch **gekennzeichnet,** daß der Bremsträger (10) an der ersten Seite der Bremsscheibe (12) zwei Arme (20, 22) aufweist, von denen
— ein erster Arm (20) geringerer Steifigkeit mit den Bremskräften der direkt betätigten Bremsbacke (64) belastet ist,
— ein zweiter Arm (22) größerer Steifigkeit den Brückenteil (32) trägt und mit den von diesem aufgenommenen Bremskräften der indirekt betätigten Bremsbacke (66) belastet ist, und
— diese beide Arme (20, 22) in ihrer Steifigkeit so aufeinander abgestimmt sind, daß die beiden Bremsbacken (64, 66) beim Bremsen wenigstens annähernd gleich große, durch elastische Verformungen der Bremse bedingte Bewegungen in Richtung der Bremskräfte (E, F) ausführen.

2. Teilbelag-Scheibenbremse nach Anspruch 1, dadurch **gekennzeichnet,** daß die beiden Arme (20, 22), bezogen auf die Betriebsdrehrichtung (B) der Bremsscheibe (12), auf der Einlaufseite der Bremse angeordnet sind.

3. Teilbelag-Scheibenbremse nach Anspruch 1 oder 2, dadurch **gekennzeichnet,** daß die beiden Arme (20, 22) sich wenigstens annähernd radial zur Achse (A) der Bremsscheibe (12) erstrecken.

4. Teilbelag-Scheibenbremse nach Anspruch 1 bis 3, dadurch **gekennzeichnet,** daß der Arm (20) geringerer Steifigkeit einen Bolzen (30) trägt, an dem die direkt betätigte Bremsbacke (64) geführt ist.

5. Teilbelag-Scheibenbremse nach Anspruch 4, dadurch **gekennzeichnet,** daß der Bolzen (30) sich über die Bremsscheibe (12) hinweg auf deren andere Seite erstreckt, dort die indirekt betätigte Bremsbacke (66) führt und in geringem Abstand von dieser am Brückenteil (32) abgestützt ist.

6. Teilbelag-Scheibenbremse nach Anspruch 4 oder 5, dadurch **gekennzeichnet,** daß der Bolzen (30) einen von der Bremsscheibe (12) weg gerichteten Schaft (38) aufweist, an dem eine Führung (48) für den Schwimmsattel (50) angeordnet ist.

7. Teilbelagscheibenbremse nach Anspruch 6, dadurch **gekennzeichnet,** daß der Schwimmsattel (50) an einem zweiten Bolzen (34) elastisch abgestützt ist.

## Revendications

1. Frein à disque à garnitures partielles, comprenant
— un support de frein (10) devant être attaché au droit d'un premier côté d'un disque de frein (12) et comportant un élément de pont (32) qui s'étend, à califourchon, jusqu'à l'autre côté,
— deux mâchoires de frein (64, 66) montées chacune d'un côté du disque de frein (12) et réagissant contre les efforts de freinage en s'appuyant contre le support de frein (10),

— un dispositif d'actionnement (60) monté au droit du premier côté du disque de frein (12) pour actionner directement une mâchoire de frein (64), et

— un étrier flottant (50) passant par-dessus le disque de frein (12) pour transmettre des forces d'actionnement à l'autre mâchoire de frein (66), à actionnement indirect, **caractérisé** en ce que, au droit du premier côté du disque de frein (12), le support de frein (10) comprend deux bras (20, 22), dont

— un premier bras (20), moins rigide, est chargé des efforts de freinage de la mâchoire de frein (64) à actionnement direct,

— un deuxième bras (22), d'une rigidité plus grande, supporte l'élément de pont (32) et est chargé des efforts de freinage de la mâchoire de frein (66) à actionnement indirect qu'absorbe ledit élément de pont, et

— en ce que lesdits deux bras (20, 22), quant à leur rigidité, sont adaptés l'un à l'autre de telle manière que, à l'application du frein, les deux mâchoires de frein (64, 66) exécutent des mouvements sensiblement égaux, résultant de déformations élastiques du frein, dans la direction des efforts de freinage (E, F).

2. Frein à disque à garnitures partielles selon la revendication 1, **caractérisé** en ce que, par rapport au sens de rotation de service (B) du disque de frein (12), les deux bras (20, 22) sont montés dans une position qu'un point quelconque sur le disque de frein atteint le premier.

3. Frein à disque à garnitures partielles selon la revendication 1 ou 2, **caractérisé** en ce que les deux bras (20, 22) sont orientés dans une direction sensiblement radiale par rapport à l'axe (A) du disque de frein (12).

4. Frein à disque à garnitures partielles selon les revendications 1 à 3, **caractérisé** en ce que le bras (20), moins rigide, porte un boulon (30) sur lequel se guide la mâchoire de frein (64) à actionnement direct.

5. Frein à disque à garnitures partielles selon la revendication 4, **caractérisé** en ce que le boulon (30) passe pardessus le disque de frein (12) jusqu'à l'autre côté de celui-ci où il guide la mâchoire de frein (66) à actionnement indirect, et qu'il s'appuie contre l'élément de pont (32) à proximité de la mâchoire (66).

6. Frein à disque à garnitures partielles selon la revendication 4 ou 5, **caractérisé** en ce que le boulon (30) comporte une tige (38) qui s'étend dans une direction opposée au disque de frein (12) et sur laquelle est monté un guidage (48) pour l'étrier flottant (50).

7. Frein à disque à garnitures partielles selon la revendication 6, **caractérisé** en ce que l'étrier flottant (50) s'appuie élastiquement contre un deuxième boulon (34).

## Claims

1. Spot-type disc brake comprising
— a brake support (10) which is to be mounted on a first side of a brake disc (12) and comprises a bridge portion (32) engaging over onto the other side,

— two brake pads (64, 66) which are arranged on either side of the brake disc (12) and supported against the braking forces at the brake support (10),

— an actuator (60) which is arranged for direct actuation of a brake pad (64) on the first side of the brake disc (12) and

— a floating caliper (50) which for transmitting actuating forces to the other indirectly actuated brake pad (66) engages beyond the brake disc (12), characterized in that the brake support (10) comprises at the first side of the brake disc (12) two arms (20, 22) of which

— a first arm (20) of lower rigidity is loaded with the braking forces of the directly actuated brake pad (64),

— a second arm (22) of higher rigidity carries the bridge portion (32) and is loaded with the braking forces taken up thereby of the indirectly actuated brake pad (66), and

— said two arms (20, 22) are adapted to each other in their rigidity so that the two brake pads (64, 66) on braking execute at least substantially equimagnitude movements in the direction of the braking forces (E, F) due to elastic deformations of the brake.

2. Spot-type disc brake according to claim 1, characterized in that the two arms (20, 22) are arranged on the entry side of the brake with respect to the operating rotational direction (B) of the brake disc (12).

3. Spot-type disc brake according to claim 1 or 2, characterized in that the two arme (20, 22) extend at least approximately radially to the axis (A) of the brake disc (12).

4. Spot-type disc brake according to claims 1 to 3, characterized in that the arm (20) of lower rigidity carries a bolt (30) on which the directly actuated brake pad (64) is guided.

5. Spot-type disc brake according to claim 4, characterized in that the bolt (30) extends beyond the brake disc (12) onto the other side thereof where it guides the indirectly actuated brake pad (66) and is supported at a slight distance from the latter at the bridge portion (32).

6. Spot-type disc brake according to claim 4 or 5, characterized in that the bolt (30) comprises a shank (38) which is directed away from the brake disc (12) and on which a guide (48) for the floating caliper (50) is disposed.

7. Spot-type disc brake according to claim 6, characterized in that the floating caliper (50) is elastically supported at a second bolt (34).

# FIG.1

# FIG.2